# EUROPÄISCHE PATENTSCHRIFT

(11) **EP 1 849 640 B1**
(45) Veröffentlichungstag und Bekanntmachung des Hinweises auf die Patenterteilung: **20.11.2019**
(21) Anmeldenummer: 07008165.8
(22) Anmeldetag: 21.04.2007
(51) Int. Cl.: B60K 11/04

(54) **Motorkühlung auf dem Dach eines Omnibusses**
Motor cooling device on the roof of an omnibus
Refroidissement du moteur sur le toit d'un omnibus

(30) Priorität: 25.04.2006 DE 102006018995
(43) Veröffentlichungstag der Anmeldung: 31.10.2007
(73) Patentinhaber: MAN Truck & Bus SE, 80995 München (DE)
(72) Erfinder: Gietl, Karl, 85716 Unterschleissheim (DE); Killy, Alois, 83629 Naring / Weyarn (DE); Blümel, Gottfried, 85235 Odelzhausen (DE)
(74) Vertreter: v. Bezold & Partner Patentanwälte - PartG mbB

(56) Entgegenhaltungen:
- DE-A1- 19 960 616
- FR-A1- 2 448 449
- GB-A- 1 346 998
- JP-A- 4 185 575
- JP-U- 63 007 026
- JP-U- 63 035 618
- US-A- 1 921 588
- US-A1- 2002 195 090

## Beschreibung

Die Erfindung bezieht sich auf einen Omnibus mit einem Verbrennungsmotor und einer zugehörigen Motorkühlung, die zwei Kühlmittelkreisläufe aufweist, in die mindestens ein Kühler eingeschaltet ist, wobei die Kühler auf dem Omnibus-Dach angeordnet sind.

Zum Stand der Technik kann zunächst verwiesen werden auf die FR 2 448 449 A1, die US 1 921 588 A, die GB 1 346 998 A, die JP 63 007026 U, die JP 63 035618 U, die JP 4 185575 A, die DE 199 60 616 A1 und die US 2002/195090 A1. Der nächstliegende bekanntgewordene Stand der Technik ist der FR2448449A1 zu entnehmen.

Aus der DE 1 476 332 ist eine wassergekühlte Brennkraftmaschine mit seitlich angeordneter Kühleinrichtung und einem im Abstand zur Maschine angeordneten Wasserkühler bekannt, wobei die von dem Kühlgebläse geförderte Kühlluft in einem zwischen dem Wasserkühler und der Maschine gebildeten und durch ein Gebläse abgedeckten Raum geblasen wird. Bei einer Kühleinrichtung dieser Art wird die von dem Kühlgebläse angesaugte Luft über Leitbleche zwischen dem Motor und dem Wasserkühler geführt. Bei einer derartigen Anordnung kann nicht auf einen durch die Fahrgeschwindigkeit entstehenden Staudruck zurückgegriffen werden, wodurch eine Höherdimensionierung der Kühlanlage erforderlich wird. Ferner ist eine Kühleinrichtung bekannt, bei der die Kühlluft nacheinander den Kühler für die Ladeluftkühlung und die Wasserkühlung durchströmt. Somit wird für die Motorkühlung immer die durch die Ladeluftkühlung vorgewärmte Luft herangezogen. Der Gesetzgeber gibt dem Kraftfahrtzeugbau außerdem im Hinblick auf die Lärm- und Abgasemission laufend strengere Grenzwerte vor, die bei fahrzeugseitig gleich bleibend verfügbarem Bauraum stetig höhere Anforderungen an das Kühlsystem stellen.

Es ist daher Aufgabe der vorliegenden Erfindung, eine leistungsstarke Motorkühlung zu schaffen, die den Innenraum des Omnibusses im Bezug auf die Platzverhältnisse unbeeinflusst lässt, ohne ladeluftseitig Einbußen auf Grund der dadurch notwendigen längeren Wege zur Kühlanlage hinnehmen zu müssen.

Diese Aufgabe wird erfindungsgemäß durch den Gegenstand des Anspruchs 1 gelöst.

Die Anordnung der Kühler auf dem hinteren Teil des Omnibusdaches ist von Vorteil, da somit Kühler größerer Oberfläche ausgewählt werden können, als es bei einem Kühler möglich wäre, der in unmittelbarer Umgebung des Motors angeordnet ist. Die Anordnung der Kühler auf dem Dach vermeidet Versperrungen und Verengungen für die abströmende Kühlluft, die den Lüfterwirkungsgrad verschlechtern, und insgesamt höhere Lüfterleistungen erfordern würden. Die Geräuschentwicklung wird dadurch verringert, dass der notwendigen Lüfterleistung und der Erhöhung des Lüfterwirkungsgrades durch Vergrößerung der Kühleroberfläche und der Verbesserung des Abströmverhältnisses Vorschub geleistet wird. Bei der Anordnung der Kühler auf dem Dach des Omnibusses ist es leichter möglich, den Motor des Omnibusses abzukapseln und so zu isolieren, dass sich die Geräuschentwicklung durch den Motor in beträchtlicher Weise verringern lässt. Vorteilhaft ist, dass die auf dem Dach angeordnete Motorkühlung zu einem niedrigeren Energieverbrauch der Lüfter führt. Die Lüfter sind darüber hinaus weniger anfällig für Aufnahme von Schmutzpartikeln wie z. B. aufgewirbelten Sand, Kies oder Spritzwasser. Die Betriebssicherheit wird dadurch begünstigt, dass die Kühlerlamellen nicht verstopft werden können und sich am Lüfter keine Schmutzablagerungen bilden. Bei entsprechender Gestaltung der Kühlluftansaugung bzw. bei Verwendung entsprechend beweglicher Lamellen ist es denkbar, die Lüfterleistung in dem Maße zu reduzieren, wie der durch die Fahrgeschwindigkeit bedingte Staudruck steigerbar ist. Die vorliegende Erfindung ermöglicht eine deutliche Reduzierung der durch die Motorkühlung verursachten Lärmemission, da die zur Motorkühlung erforderliche Luftströmung bei Vergrößerung der Kühler verringert werden kann.

Gemäß einer weiteren Ausführungsform der Erfindung sind die Kühler in Fahrtrichtung gesehen längs zur Mittellinie des Fahrzeug-Dachs angeordnet. Hierdurch wird erreicht, dass die Kühler entsprechend der Stärke und des Kühlungsbedarfs der jeweiligen Motoren in ihrer Längsachse vergrößert werden können. Eine größere Baulänge der Kühler begünstigt somit die Leistungsfähigkeit der Motorkühlung. Je nach der Anzahl der Kühlkreisläufe können entsprechend viele Kühler auf dem Dach des Omnibusses angeordnet werden. Der zur Verfügung stehend Bauraum im Motorraum bietet darüber hinaus oft nicht ausreichend Platz, um einen entsprechend größeren Kühler unterbringen zu können.

In einer weiteren Ausführungsform der Erfindung sind die Kühler dachförmig entgegengesetzt geneigt, zur Fahrzeugmitte hin angestellt. Hierdurch wird eine sehr kompakte und somit kostengünstige Bauweise erreicht. Die räumlich getrennte Anordnung der Kühler schließt aus, dass über den Lüfter des einen Kühlers, die Abluft des jeweils gegenüberliegenden Kühlers angesaugt wird und sich somit die Kühlleistung erheblich verringern würde. Die Ausführungsform hat den Vorteil, dass in Längsrichtung gesehen der Bauraumbedarf gering ist.

Die Motorkühlung kann unabhängig vom Staudruck des Fahrtwindes erfolgen, sodass die Ausführungsform insbesondere für Omnibusse im langsamen Stadtverkehr geeignet ist.

In einer weiteren Ausführungsform sind die Kühler in Fahrtrichtung gesehen nach vorne angestellt. Hierdurch kann der Staudruck zur Kühlung ausgenutzt werden und der Luftaustritt erfolgt entgegen der Fahrtrichtung nach hinten über das Heck des Fahrzeugs hinaus. Die Ausführungsform ermöglicht seine separate Lüftersteuerung und einen regelbaren Luftpfad für die Niedertemperatur- und die Hochtemperaturkühlung. Als Luftfahrt wird in diesem Zusammenhang der Weg der Luftströmung nach Ansaugen durch den Lüfter bezeichnet. Die Luft, die sich auf der Seite des Kühlers befindet, die vom Lüfter abgekehrt ist, wird mittels des Lüfters durch den Kühler hindurchgesaugt und auf der Seite des Lüfters freigesetzt, die vom Kühler abgekehrt ist. Der erforderliche Luftpfad wird vorzugsweise durch geregelte Lüfter erzeugt. Hierzu ist mindestens ein Lüfter erforderlich, dessen Antrieb elektrisch oder hydrostatisch erfolgen kann.

Nach einer weiteren Ausführungsform der Erfindung sind die Kühler in Fahrtrichtung gesehen nach hinten angestellt. Hierdurch wird eine bessere Stromlinienform und eine geringere Aufbauhöhe der Lüfterverkleidung erreicht und die Sogwirkung für die jeweiligen Lüfter verbessert.

Nach einer anderen Ausführungsform der Erfindung ist im Luftpfad einem jeden Kühler ein Lüfter nachgeordnet. Hierdurch wird die Belüftung der Kühler um ein Weiteres verbessert und ist je nach vorherrschender Außentemperatur bzw. der gegebenen Betriebstemperatur regelbar. Die einzelnen Kühlkreisläufe können auf diese Weise je nach Bedarf individuell gesteuert werden.

Nach einer weiteren Ausführungsform der Erfindung ist zwischen den Kühlern eine, den Luftpfad teilende Schottwand angeordnet. Die Ausrichtung der Schottwand erfolgt vorzugsweise längs zur Fahrtrichtung und verhindert, dass die durch den Lüfter des einen Kühlkreislaufes austretende warme Abluft durch den Kühler des jeweils anderen Kühlkreislaufes angesaugt wird und sich somit die Leistung des anderen Kühlkreislaufes verringert. Andererseits ist denkbar, dass die Schottwand in der Höhe reduzierbar ist, um z. B. bei extrem niedrigen Außentemperaturen der zügigeren Anwärmung des jeweils anderen Kühlkreislaufes Vorschub zu leisten. Durch die Schottwand entstehen zwei voneinander unabhängige Luftpfade mit separater Lüftersteuerung. Hierdurch wird eine günstige Energiebilanz für die Lüfterantriebe bewirkt.

In einer weiteren Ausführungsform der Erfindung sind die Kühler in Sandwich-Bauweise quer zur Fahrtrichtung angeordnet. Vorzugsweise wird dabei der Niedertemperaturkühler in Fahrtrichtung gesehen vor den Hochtemperaturkühler montiert. Eine umgekehrte Anordnungsform ist jedoch in gleicher Weise denkbar. Vorteilhaft ist, dass hierbei die Wärmeabfuhr über einen gemeinsamen Luftstrom erfolgt, der zusätzlich durch die Nutzung des Staudrucks unterstützt wird. Der erforderliche Luftpfad wird vorzugsweise durch geregelte Lüfter erzeugt. Es ist mindestens ein gemeinsamer Lüfter erforderlich. Der Luftpfad kann jedoch so beschaffen sein, dass sowohl der Luftpfad durch den Niedertemperaturkühler als auch derjenige durch den Hochtemperaturkühler mit je einem Lüfter in Gang gesetzt wird.

In einer anderen Ausführungsform ist den Kühlern ein Kühlmittelausgleichsbehälter zugeordnet. Hierdurch ist die Zusteuerung von Kühlmittel möglich. Es wird im Weiteren davon ausgegangen, dass das Kühlmittel eine Kühlflüssigkeit ist.

Nach einer weiteren Ausführungsform der Erfindung sind die Kühler je einem Niedertemperatur- und einem Hochtemperaturkühlkreislauf zugeordnet. Der Hochtemperaturkühlkreislauf führt dabei dem Motor das erforderliche Kühlmittel zu. Der Niedertemperaturkreislauf bewirkt bei aufgeladenen Motoren zusätzlich die Kühlung der für die Aufladung erforderlichen Ladeluft, wodurch eine höhere Ladeluftdichte die Leistung und den Wirkungsgrad des Motors sicherstellt. Zusätzlich können Verbrauch und Emissionen gesenkt werden.

Nach einer weiteren Ausführungsform der Erfindung weist der Verbrennungsmotor wenigstens einen Ladeluftwärmetauscher auf, der die Abwärme der Ladeluft auf den Niedertemperaturkühlkreislauf überträgt. In Bezug auf die Verrohrung kann eine wesentliche Platzersparnis dadurch erreicht werden, dass die Abwärme nicht durch die Zuführung der Ladeluft zu einem auf dem Dach angeordneten Ladeluftkühler erfolgt, sondern die Wärme über einen Ladeluftwärmetauscher auf eine Kühlflüssigkeit übertragen werden kann, die die freigesetzte Abwärme des Ladeluftkühlers dem Niedertemperaturkühler zuführt. Der Ladeluftwärmetauscher ist kleiner dimensionierbar und kann am Motor angebaut sein. Es ist vorstellbar, dass jedem Ladeluftverdichter ein Ladeluftwärmetauscher zugeordnet ist.

Aus einer anderen Ausführungsform der Erfindung geht hervor, dass der Luftpfad zwischen jedem Kühler und dem zugehörigen Lüfter über eine, Lamellen aufweisende Schottwand abriegelbar ist.

Vorstellbar ist, dass der Luftpfad hinter jedem Lüfter über eine lamellenaufweisende Schottwand abriegelbar ist.

Denkbar ist aber auch, dass die Lamellen in der Schottwand schwenkbar gelagert sind. Die Lamellen können drehbar oder schwenkbar in den Luftpfad integriert werden. Vorteilhaft ist, dass dadurch eine getrennte Regelung der Kühlleistung möglich ist, da beispielsweise eine Erhöhung des Strömungswiderstands im Niedertemperaturluftpfad einen erhöhten Luftdurchsatz im Hochtemperaturluftpfad bewirkt und umgekehrt. Die Luftpfade können so ausgeführt sein, dass beide Luftpfade mit eigenen Lüftern versehen sind. Der Luftaustritt durch den Lüfter kann z. B. bei Stillstandszeiten des Omnibusses verschließbar sein. Vorteilhaft ist es, wenn das Öffnen der Lamellen über den Staudruck des Lüfters erfolgt, es ist jedoch auch denkbar, die Lamellen mechanisch so z. B. pneumatisch, elektromechanisch, hydraulisch usw. anzusteuern. Die Lamellen können bei entsprechender Gestaltung während der Fahrt zum Aufbau von Staudruck eingesetzt werden.

Weitere vorteilhafte Ausgestaltungen und zweckmäßige Fortbildungen der erfindungsgemäßen Motorkühlung sind aus den nachstehenden Beispielsbeschreibungen anhand der Zeichnung näher entnehmbar. Hierbei zeigen:
- Fig. 1: das Heck eines Omnibusses mit quer zur Fahrtrichtung angeordneten Kühlern,
- Fig. 2: das Heck eines Omnibusses mit zwei parallelen Kühlern, die in Fahrtrichtung angestellt sind,
- Fig. 3: das Heck eines Omnibusses mit zwei parallelen Kühlern, die entgegen der Fahrtrichtung angestellt sind,
- Fig. 4: das Heck eines Omnibusses mit Kühlern, die dachförmig entgegengesetzt geneigt zur Fahrzeugmitte hin angestellt sind,
- Fig. 5: den Luftpfad bei einer Anordnung der Kühler entsprechend der Fig. 4 und
- Fig. 6: den Luftpfad mit entgegen der Fahrrichtung gesehen über dem Lüfter angeordneten Lamellen.

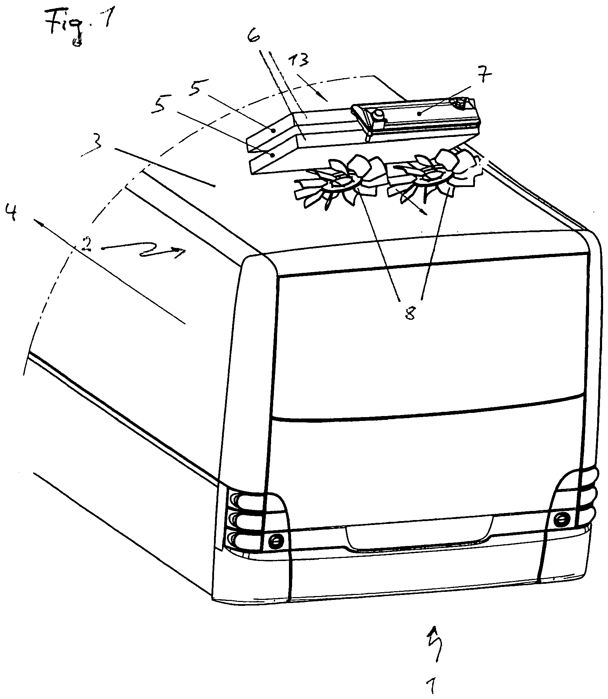

Fig. 1 zeigt das Heck 1 eines Omnibusses mit dem hinteren Teil 2 des Daches 3. Auf diesem Teil des Daches 3 sind quer zur Fahrtrichtung 4 zwei Kühler 5 angeordnet. Die Kühler 5 sind entgegen der Fahrtrichtung 4 in einem Winkel angestellt. Die Kühler können z. B. in einem Winkel zwischen 10° bis 80° angestellt sein. Auf den zum Heck 1 des Omnibusses gewandten Oberkanten 6 der Kühler 5 ist ein Kühlmittelausgleichsbehälter 7 angeordnet. Entgegen der Fahrtrichtung 4 sind hinter den beiden Kühlern 5 zwei Lüfter 8 erkennbar.

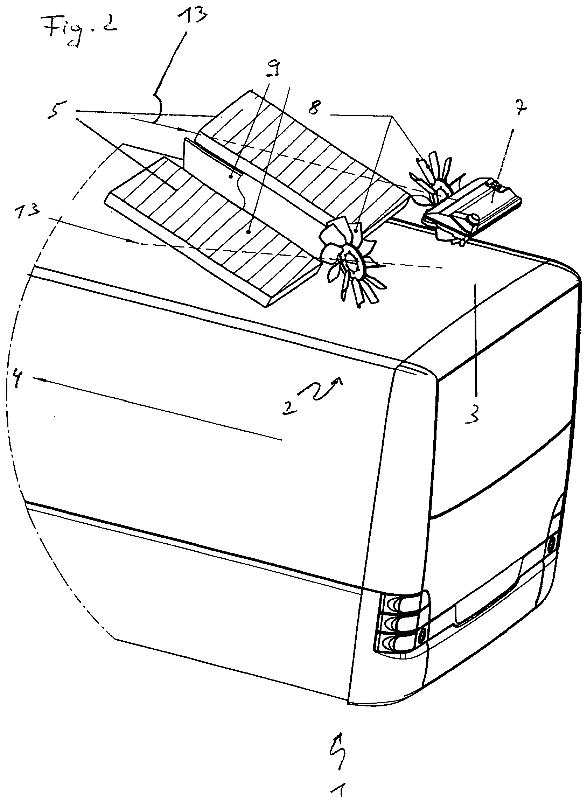

Fig. 2 zeigt das Heck 1 eines Omnibusses entsprechend demjenigen aus Fig. 1. Auf dem hinteren Teil 2 des Daches 3 sind gegenüber der Fahrzeug-Längsachse zwei Kühler 5 parallel zueinander angeordnet. Zwischen den beiden Kühlern 5 ist eine Schottwand 9 erkennbar. Entgegen der Fahrtrichtung 4 ist jedem der Kühler 5 ein Lüfter 8 nachgeordnet. In Fahrtrichtung 4 gesehen auf der rechten Seite des Daches 3 ist hinter dem Lüfter 8 ein Kühlmittelausgleichsbehälter 7 erkennbar. Die beiden Kühler 5 sind entgegen der Fahrtrichtung 4 in einem Winkel angestellt.

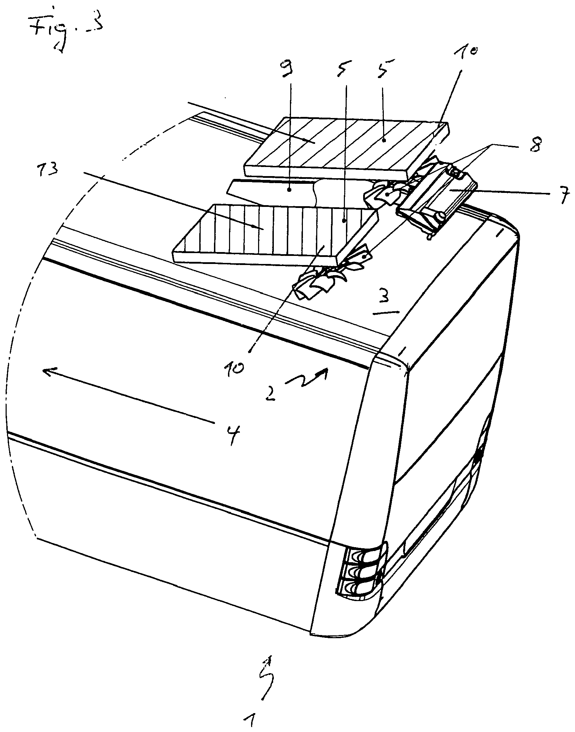

Fig. 3 zeigt den hinteren Teil 2 des Hecks 1 eines Omnibusses entsprechend der Fig. 1. Auf dem hinteren Teil 2 des Daches 3 sind parallel zueinander zwei Kühler 5 angeordnet, die voneinander durch eine Schottwand 9 beabstandet sind. Die Kühler 5 sind entgegen der Fahrtrichtung 4 in einem Winkel angestellt. Unterhalb des von dem Dach 3 beabstandeten Endes 10 der Kühler 5 sind je ein Lüfter 8 angeordnet. In Fahrtrichtung 4 des Omnibusses auf der rechten Seite hinter dem Lüfter 8 ist ein Kühlmittelausgleichsbehälter 7 vorgesehen. Die Schottwand 9 ist in der Figur geschnitten dargestellt.

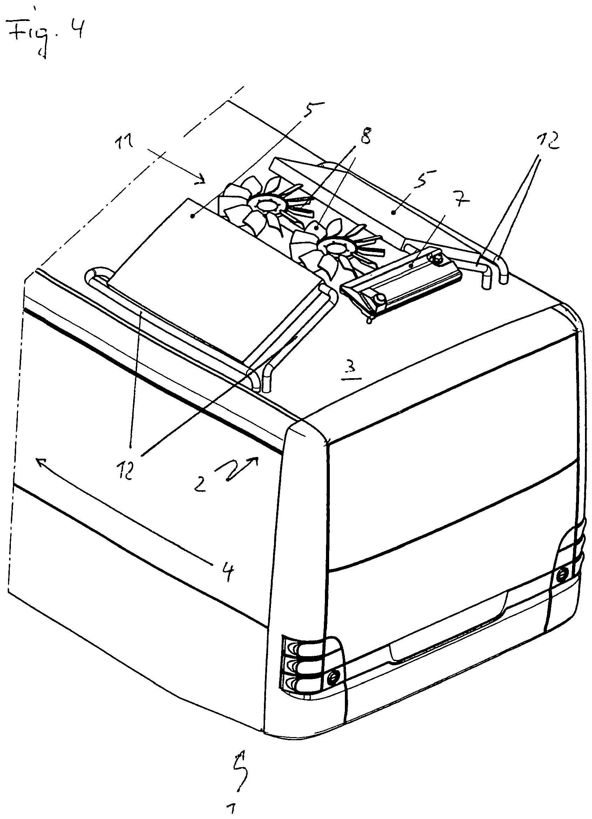

Fig. 4 zeigt entsprechend der Fig. 1 den hinteren Teil 2 des Daches 3 des Hecks 1 eines Omnibusses. Auf dem hinteren Teil 2 des Daches 3 sind zwei Kühler 5 dachförmig entgegengesetzt geneigt zur Fahrzeugmitte 11 angestellt. Die Zu- bzw. Abführungsleitungen für das Kühlmittel zu den beiden Kühlern 5 sind mit der Bezugsziffer 12 bezeichnet. Zwischen den beiden dachförmig angestellten Kühlern 5 sind etwa in der Fahrzeugmitte 11 je zwei Lüfter 8 angeordnet. Entgegen der Fahrtrichtung 4 zeigt die Figur hinter dem hinteren Lüfter 8 einen Kühlmittelausgleichsbehälter 7.

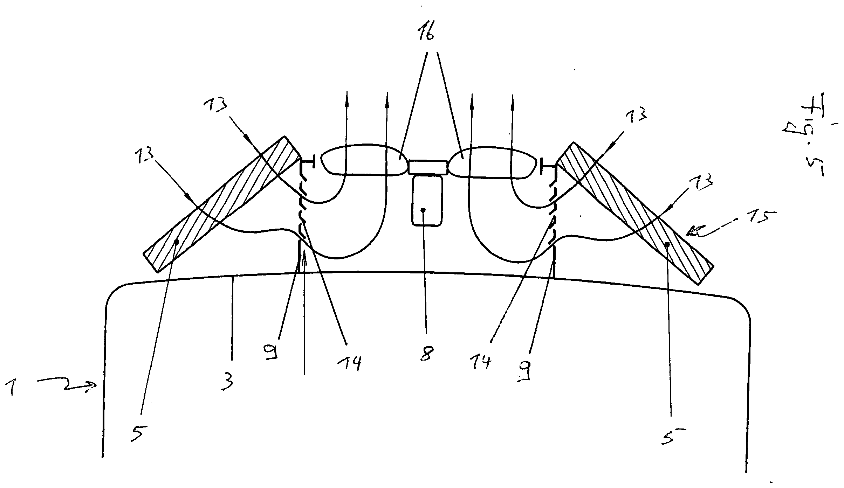

Fig. 5 zeigt jeweils seitlich geschnitten das Heck 1 eines Omnibusses mit darauf dachförmig entgegengesetzt geneigt angeordneten Kühlern 5 und einem Lüfter 8. In der Figur ist der Verlauf des Luftpfads mit der Bezugsziffer 13 bezeichnet. Etwa senkrecht zum Dach 3 sind zwischen den Kühlern 5 und dem Lüfter 8 je eine Schottwand 9 angeordnet, die zum Lüfter 8 hin geöffnete Lamellen 14 aufweist. Der Luftpfad 13 trifft auf der Seite 15 des Kühlers 5 auf, die von dem Lüfter 8 abgekehrt ist und durchdringt den Kühler 5, um sodann entlang der Lamellen 14 durch die Schottwand 9 in den unter dem Lüfter 8 angeordneten Bereich zwischen den beiden Schottwänden 9 zu gelangen. Der Luftpfad 13 beschreibt daraufhin einen Bogen vom Dach 3 weg hin zum Lüfter 8 um durch die Flügel 16 des Lüfters 8 hindurchzutreten.

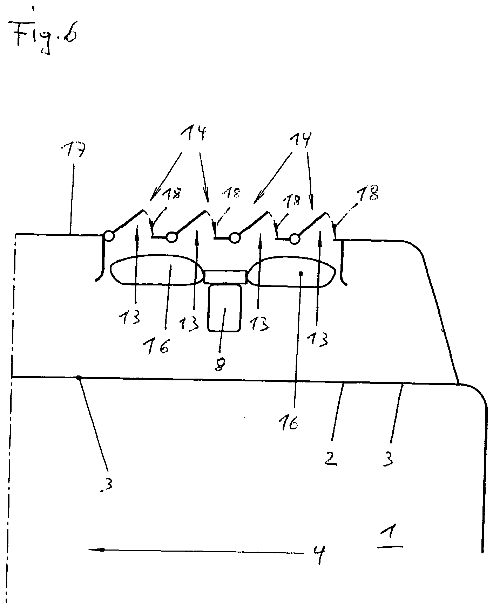

Fig. 6 zeigt in schematischer Darstellung in seitlichem Schnitt das Heck 1 eines Omnibusses mit dem hinteren Teil 2 des Daches 3. Unter einer Verkleidung 17 ist der Lüfter 8 zu erkennen an dessen Flügeln 16 der Luftpfad 13 entlangströmt. An der vom Dach 3 abgewandten Seite der Verkleidung 17 über dem Lüfter 8 sind Lamellen 14 angeordnet. Die Lamellen 14 sind in geöffneter Stellung dargestellt und entsprechend der Pfeilrichtung 18 schließbar. Die Lamellen 14 können durch Staudruck der lüfterseitigen Abwärme oder mechanisch geöffnet werden.

### Bezugszeichen:

- 1.: Heck
- 2.: hinterer Teil des Dachs
- 3.: Dach
- 4.: Fahrtrichtung
- 5.: Kühler
- 6.: Oberkanten
- 7.: Kühlmittelausgleichsbehälter
- 8.: Lüfter
- 9.: Schottwand
- 10.: beabstandetes Ende der Kühler
- 11.: Fahrzeugmitte
- 12.: Ab-und Zuführungsleitungen
- 13.: Luftpfad
- 14.: Lamellen
- 15.: Seite des Kühlers
- 16.: Flügel
- 17.: Verkleidung
- 18.: Pfeilrichtung

## Patentansprüche

1. Omnibus mit einem Verbrennungsmotor und einer zugehörigen Motorkühlung, die zwei Kühlmittelkreisläufe aufweist, in die mindestens ein Kühler eingeschaltet ist, wobei die Kühler auf dem Omnibus- Dach angeordnet sind, wobei die Kühler (5) auf dem hinteren Teil (2) des Daches (3) parallel zueinander und in einem Winkel zur Dachoberfläche angestellt sind, **dadurch gekennzeichnet, dass** die Kühler (5) dachförmig entgegengesetzt geneigt, zur Fahrzeugmitte (11) hin angestellt sind, wobei zwischen den Kühlern (5) eine, den Luftpfad (13) teilende Schottwand (9) angeordnet ist, und wobei der Luftpfad (13) zwischen jedem Kühler (5) und dem zugehörigen Lüfter (8) über eine Lamellen (14) aufweisende Schottwand (9) abriegelbar ist und/oder der Luftpfad (13) hinter jedem Lüfter (5) über die Lamellen (14) aufweisende Schottwand (9) abriegelbar ist.

2. Omnibus nach Anspruch 1, **dadurch gekennzeichnet, dass** die Kühler (5) in Fahrrichtung (4) gesehen, längs zur Mittellinie des Fahrzeug-Dachs (3) angeordnet sind.

3. Omnibus nach einem oder mehreren der vorhergehenden Ansprüche, **dadurch gekennzeichnet, dass** im Luftpfad (13) einem jeden Kühler (5) ein Lüfter (8) nachgeordnet ist.

4. Omnibus nach einem oder mehreren der vorhergehenden Ansprüche, **dadurch gekennzeichnet, dass** den Kühlern (5) ein Kühlmittelausgleichsbehälter (7) zugeordnet ist.

5. Omnibus nach Anspruch 1, **dadurch gekennzeichnet, dass** die Kühler (5) je einem Niedertemperatur- und einem Hochtemperaturkühlkreislauf zugeordnet sind.

6. Omnibus nach einem oder mehreren der vorhergehenden Ansprüche, **dadurch gekennzeichnet, dass** der Verbrennungsmotor wenigstens einen Ladeluftkühler aufweist, der die Abwärme der Ladeluft auf den Niedertemperaturkühlkreislauf überträgt.

7. Omnibus nach Anspruch 1, **dadurch gekennzeichnet, dass** die Lamellen (14) in der Schottwand (9) schwenkbar gelagert sind.

## Claims

1. An omnibus having an internal combustion engine and an associated engine cooling system which has two coolant circuits into which at least one radiator is incorporated, wherein the radiators are arranged on the omnibus roof, wherein the radiators (5) are pitched on the rear part (2) of the roof (3) parallel to one another and at an angle to the roof surface, **characterized in that** the radiators (5) are pitched towards the vehicle centre (11) with opposite inclinations in a roof-shaped manner, wherein a partition wall (9) which splits the air path (13) is arranged between the radiators (5), and wherein the air path (13) between each radiator (5) and the associated fan (8) can be blocked off via a partition wall (9) having slats (14), and/or the air path (13) can be blocked off behind each fan (5) via the partition wall (9) having slats (14).

2. The omnibus according to Claim 1, **characterized in that**, as viewed in the direction of travel (4), the radiators (5) are arranged longitudinally with respect to the centre line of the vehicle roof (3).

3. The omnibus according to one or more of the preceding claims, **characterized in that** a fan (8) is arranged downstream of each radiator (5) in the air path (13).

4. The omnibus according to one or more of the preceding claims, **characterized in that** the radiators (5) are assigned a coolant expansion tank (7) .

5. The omnibus according to Claim 1, **characterized in that** the radiators (5) are each assigned to a low-temperature and a high-temperature cooling circuit.

6. The omnibus according to one or more of the preceding claims, **characterized in that** the internal combustion engine has at least one charge-air radiator which transmits the waste heat of the charge air to the low-temperature cooling circuit.

7. The omnibus according to Claim 1, **characterized in that** the slats (14) are pivotably mounted in the partition wall (9).

## Revendications

1. Autocar comprenant un moteur à combustion interne et un dispositif de refroidissement de moteur associé, l'autocar comportant deux circuits de refroidissement dans lesquels au moins un radiateur est en marche, les radiateurs étant disposés sur le toit de l'autocar, les radiateurs (5) étant placés sur la partie arrière (2) du toit (3) parallèlement l'un à l'autre et formant un angle par rapport à la surface du toit, **caractérisé en ce que** les radiateurs (5) sont inclinés à l'opposé l'un de l'autre en forme de toit et sont mis en place en direction du centre (11) du véhicule, une cloison étanche (9) qui divise le passage d'air (13) étant disposée entre les radiateurs (5), et le passage d'air (13) entre chaque radiateur (5) et le ventilateur associé (8) pouvant être bloqué par une cloison étanche (9) pourvue de lamelles (14) et/ou le passage d'air (13) pouvant être bloqué en arrière de chaque ventilateur (5) par la cloison étanche (9) pourvue de lamelles (14).

2. Autocar selon la revendication 1, **caractérisé en ce que** les radiateurs (5) sont disposés le long de l'axe du toit (3) du véhicule lorsque l'on regarde dans la direction de roulement (4).

3. Autocar selon l'une au moins des revendications précédentes, **caractérisé en ce qu'**un ventilateur (8) est disposé dans le passage d'air (13) en aval de chaque radiateur (5).

4. Autocar selon l'une au moins des revendications précédentes, **caractérisé en ce qu'**un récipient d'équilibrage de liquide de refroidissement (7) est associé aux radiateurs (5).

5. Autocar selon la revendication 1, **caractérisé en ce que** les radiateurs (5) sont associés chacun à un circuit de refroidissement à basse température et à un circuit de refroidissement à haute température.

6. Autocar selon l'une au moins des revendications précédentes, **caractérisé en ce que** le moteur à combustion interne comporte au moins un radiateur intermédiaire qui transfère la chaleur perdue de l'air de suralimentation au circuit de refroidissement à basse température.

7. Autocar selon la revendication 1, **caractérisé en ce que** les lamelles (14) sont montées de manière pivotante dans la cloison étanche (9).
